# EUROPEAN PATENT APPLICATION

(11) **EP 1 382 520 A2**
(43) Date of publication of application: **21.01.2004**
(21) Application number: 03015339.9
(22) Date of filing: 08.07.2003
(51) Int. Cl.: B62J 1/26

(54) **Saddle with additional pre-moulded padding and protected upper identification elements**

(30) Priority: 19.07.2002 IT PD20020199
(71) Applicant: SELLE SMP sas, 35020 Casalserugo (Padua) (IT)
(72) Inventor: Schiavon, Franco, 35020 Casalserugo (Padua) (IT); Schiavon, Maurizio, 35020 Casalserugo (Padua) (IT)
(74) Representative: Gustorf, Gerhard, Dipl.-Ing.

(57) **Abstract**

The invention is a new saddle with a covering (C) that can be fixed to the body (S), equipped with an additional padding (G) made of DOW ® WORASTAR polyurethane gel enclosed between two plastic films (F1, F2) that are heat-welded to each other. Said plastic films (F1, F2) enclosing the additional padding (G) are successively heat-welded (Ts) to the covering (C) of the saddle.

## Description

This patent concerns the saddles with seat cushion and in particular it concerns a new saddle with an additional pre-moulded padding, constituted by a cushion enclosed between two plastic films.

The known saddles comprise a rigid plastic body, onto which the seat cushion is applied or directly manufactured, said seat cushion being successively covered with a flexible leather or plastic covering.

The most comfortable saddles are provided with an additional upper padding, mainly constituted by a gel layer.

The manufacturing process of saddles with additional upper gel padding is very expensive and requires many additional and delicate operations.

The upper gel padding is carried out directly on the saddle.

The current production of saddles with additional gel padding requires expensive special moulds, expensive specific equipment for the instantaneous production of gel, expensive specific equipment to condition the environment in which the gel padding is produced (dehumidifiers, deaerators, etc.). Furthermore, it is necessary to wait some time for the production of gel, the preparation of the pouring environment and the solidification of the gel before the injection of the foam seat cushion.

If it is necessary to arrange the additional gel padding in another way, or with a different shape and/or thickness, different moulds must be used and the various machines for producing and pouring gel must be re-configured.

The saddles used at present have a single-colour covering and any identification elements are printed, silk-screened or sewn directly onto the covering.

The identification elements obtained through printing or silkscreening are quick to carry out and rather inexpensive, but are not very resistant to wear, weather agents and normal use of the saddle.

The identification elements sewn on the saddle are considerably resistant to wear, weather agents and use, but are rather expensive and it takes a considerable time to apply them.

In order to overcome all the drawbacks mentioned above, a new saddle with additional pre-moulded padding has been designed and implemented. Any marks, trademarks or identification technical symbols can be printed on the upper part of the saddle.

One of the main aims of the new saddle is to allow an excellent gel padding to be produced with reduced costs and times.

Another aim of the new saddle is to allow the application of marks, trademarks and identification elements resistant to wear and weather agents.

A further aim of the new saddle is to permit the rapid and simple modification of the arrangement of the additional gel padding/paddings for the same type of saddle.

These and other direct and complementary aims have been achieved through the implementation of the new saddle with additional pre-moulded padding made of DOW ® WORASTAR polyurethane gel enclosed between two plastic films heat-welded to each other, wherein said plastic films enclosing the additional padding are heat-welded to the saddle covering.

The characteristics of the new saddle will be better highlighted by the following description of one among many possible applications of the invention, with reference to the enclosed drawings.

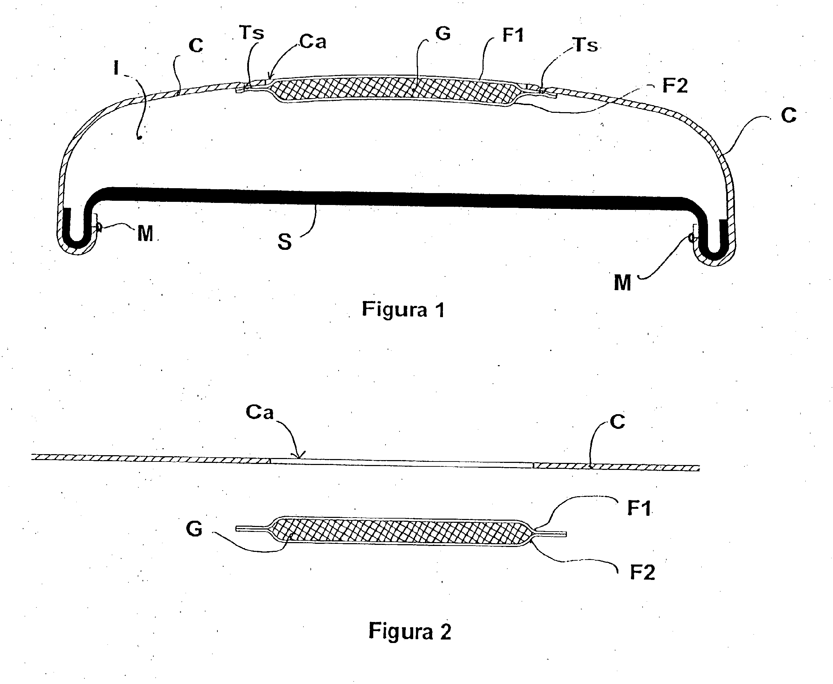

Figure 1 is a vertical cross section of the new saddle, while Figure 2 shows the separate parts that constitute the covering (C) and the additional padding (G).

The new saddle mainly comprises a body (S), at least one padding layer (I) including a padding layer made of DOW ® WORASTAR polyurethane gel (G), two plastic films (F1, F2).

The body (S) is constituted by a rigid plastic element that makes up the bearing structure of the whole saddle and the connection with the saddle pillar.

The seat cushion (I), preferably made of polyurethane foam, is directly injected onto said body (S) or applied to the same.

The covering (C) equipped with the additional polyurethane gel padding (G) is successively applied to the seat cushion (I) and to the body (S).

The additional padding (G) is constituted by a pre-moulded cushion made of DOW ® WORASTAR polyurethane gel having the desired shape.

The additional padding (G) is positioned between the two films (F1, F2) of heat-weldable plastic material. In particular, said two plastic films (F1, F2) are larger than the additional padding (G) and their edges are heat-welded (Ts) to each other, in such a way as to enclose the additional padding (G) with the utmost precision.

The upper plastic film (F1) is transparent and may bear writings, drawings or any other artistic and/or decorative element on its inner surface in contact with the additional padding (G).

The covering (C) of the saddle is constituted by a plastic sheet, typically in imitation leather, vinyl or similar material, whose size is sufficient to enclose the body (S) and the seat cushion (I).

In particular, said covering (C) is provided with a hole or opening (Ca) exactly in correspondence with the position of the additional padding (G).

The additional padding (G), enclosed between the two plastic films (F1, F2), is fitted in correspondence with the edge of the covering (C), that is, it is positioned in correspondence with the hole or opening (Ca) in the covering (C) and the edges of said opening (Ca) in the covering (C) and of the plastic films (F1, F2) are heat-welded (Ts) to each other.

The covering (C) together with the additional padding (G) is finally applied to the seat cushion (I) and fixed to the body (S), for example with metal clips (M), so that the additional padding (G) is suitably positioned as desired.

The new saddle carried out as described above offers considerable advantages.

Each cushion of the additional padding (G) is moulded between the two plastic films (F1, F2) on small moulds, and is joined to the covering (C) by means of simple heat-welds (Ts) that can be carried out with common heat-welding machines.

The additional padding (G) may also be comfortably moulded using a single, large piece that is then cut in single portions for several saddles.

The covering (C) with the additional padding (G) is applied and fixed to the seat cushion (I) and to the body (S), according to the known methods of application of the simple covering (C) and with simple metal clips (M).

The marks, trademarks or drawings present on the inner side of the upper transparent plastic film (F1) are visible and are protected against wear and weather agents by the plastic film (F1) itself.

It is possible to design the product so that the upper film (F1) is completely transparent and without marks or drawings and that the polyurethane gel forming the additional padding (G) is coloured differently from the covering (C).

Therefore, with reference to the above description and the enclosed drawings, the following claims are put forth.

## Claims

1. Saddle with covering (C) to be fixed to the body (S), **characterized in that** it is provided with an additional padding (G) made of DOW ® WORASTAR polyurethane gel enclosed between two plastic films (F1, F2) heat-welded to each other, and wherein said plastic films (F1, F2) enclosing the additional padding (G) are heat-welded (Ts) to the covering (C) of the saddle.

2. Saddle according to claim 1, **characterized in that** the covering (C) is provided with holes or openings (Ca), and wherein said plastic films (F1, F2) enclosing the additional padding (G) are heat-welded (Ts) in correspondence with said holes or openings (Ca) in the covering (C).

3. Saddle according to claims 1, 2, **characterized in that** the upper plastic film (F1) is transparent and bears marks, trademarks, writings, drawings or any other artistic and/or decorative element on its inner surface in contact with the additional padding (G).

4. Saddle according to claims 1, 2, **characterized in that** the upper plastic film (F1) is transparent and bears marks, trademarks, writings, drawings or any other artistic and/or decorative element on its outer surface.

5. Saddle according to claims 1, 2, **characterized in that** the upper plastic film (F1) is transparent, and wherein a further film bearing drawings and/or decorations is positioned between said upper transparent plastic film (F1) and the additional padding made of DOW ® WORASTAR polyurethane gel (G).
